(19) Europäisches Patentamt
European Patent Office
Office européen des brevets

(11) EP 1 959 457 A1

(12) EUROPEAN PATENT APPLICATION

(43) Date of publication:
20.08.2008 Bulletin 2008/34

(51) Int Cl.:
G21C 17/06 (2006.01)

(21) Application number: 07102350.1

(22) Date of filing: 14.02.2007

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK RS

(71) Applicant: Global Nuclear Fuel-Americas, LLC
Wilmington,
North Carolina 28401 (US)

(72) Inventors:
• Karve, Atul A.
Wilmington, NC 28409 (US)
• Potts, Gerald A.
Wilmington, NC 28412 (US)

• Dubecky, Mark A.
Wilmington, NC 28411 (US)
• Rand, Robert A.
Wilmington, NC 28403 (US)
• Latter, Gerald M.
Wilmington, NC 28411 (US)
• Moore, Brian R.
Wilmington, NC 28411 (US)

(74) Representative: Bedford, Grant Richard
London Patent Operation
GE International Inc.
15 John Adam Street
London WC2N 6LU (GB)

(54) Method of determining a cell friction metric for a control cell of a nuclear reactor

(57) In a method of determining a cell friction metric for a control cell of a nuclear reactor, a channel face fast fluence and/or a channel face controlled operation parameter is determined (510) for all channels. A total bow value is calculated (520) for each channel based on the channel face fast fluence and/or channel face control parameters. For each channel, a channel wall pressure drop parameter is determined, and a total bulge value is calculated (530) for each channel using the channel face fast fluence and channel wall pressure drop parameters. Total deformation at specified channel axial elevations for the cell is determined (540) based on the total bow and bulge values. A control blade axial friction force value is calculated (550) at each axial elevation based on the total deformation, along with channel stiffness and channel-control blade friction coefficient values. A maximum friction value is selected as the cell friction metric for the cell.

FIG. 5

500

Determine channel wall pressure drop, fast fluence, and/or channel control operation parameter at each axial elevation of cell's channel — 510

Calculate total bow value — 520

Calculate total bulge value — 530

Determine deformation at each axial elevation based on total bow, and total bulge — 540

Calculate cell friction force values at all axial elevations; maximum value selected as CFM for control cell — 550

EP 1 959 457 A1

**Description**

The present invention relates generally to determining a cell friction metric for axial movement of a control blade in a control cell of a nuclear reactor.

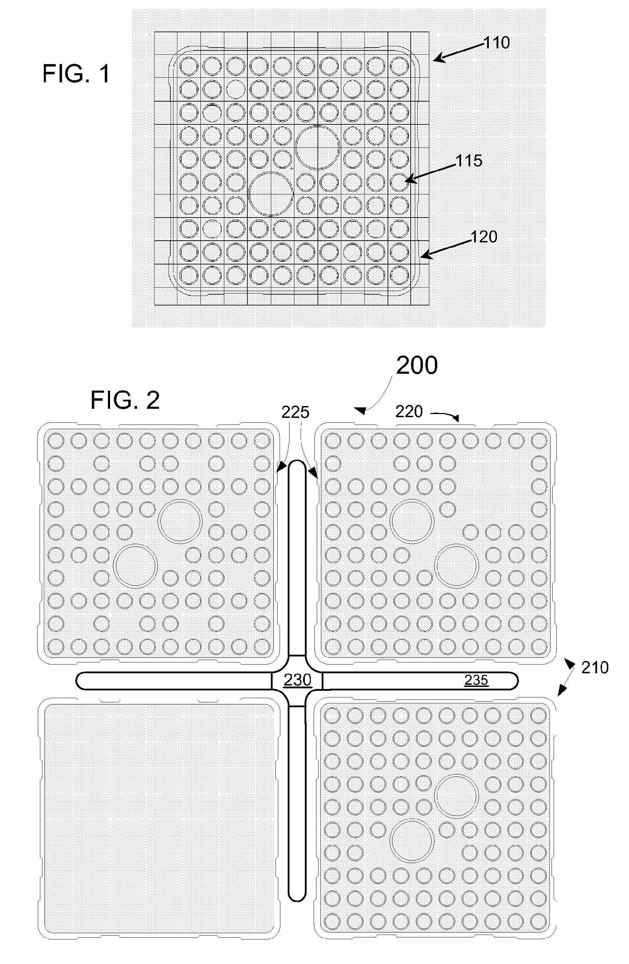

Fig. 1 is a top view of an example fuel bundle to illustrate a fuel channel. In a boiling water nuclear reactor (BWR), fuel bundles 110 are typically encased in relatively thin, rectangular fuel channels 120. In a grid, Fig. 1 shows a two-dimensional (2D) layout of a fuel bundle 110, which in this example consists of a 10x10 matrix of rod grid locations 115 enclosed in a fuel channel 120. Some of the 10x10 rod grid locations are combined to form a larger circle to illustrate different components in a fuel bundle 110. Such details however are not relevant for this discussion, as Fig. 1 is merely provided to illustrate the fuel channel 120 surrounding the fuel bundle 110. The fuel channel 120 extends about 165 inches above the fuel support plate in a BWR core, and has a thickness of about 0.10 inches.

Fig. 2 illustrates a 2D top view looking down on control blade cell 200 of a BWR. A fuel bundle 110 together with the fuel channel 120 is typically referred to as a fuel assembly 210. As shown in Fig. 2, in a BWR core, four fuel assemblies 210 are positioned in such a way that they are controlled by one cruciform shaped control blade 230. The control blade 230 with its four blade wings 235 passes through the center of the four fuel assemblies 210 as illustrated in Fig. 2. In this manner, two faces 225 of each channel 220 always face a blade wing 235, for a total of eight (8) faces in an individual control cell 200. A BWR core can be represented as a repetition of many such control cells, i.e., groups of 4 fuel assemblies 210 around a control blade 230, which are arranged at many locations across the core. For example, a BWR core typically consists of hundreds of control cells 200 and several hundred-fuel channels 220.

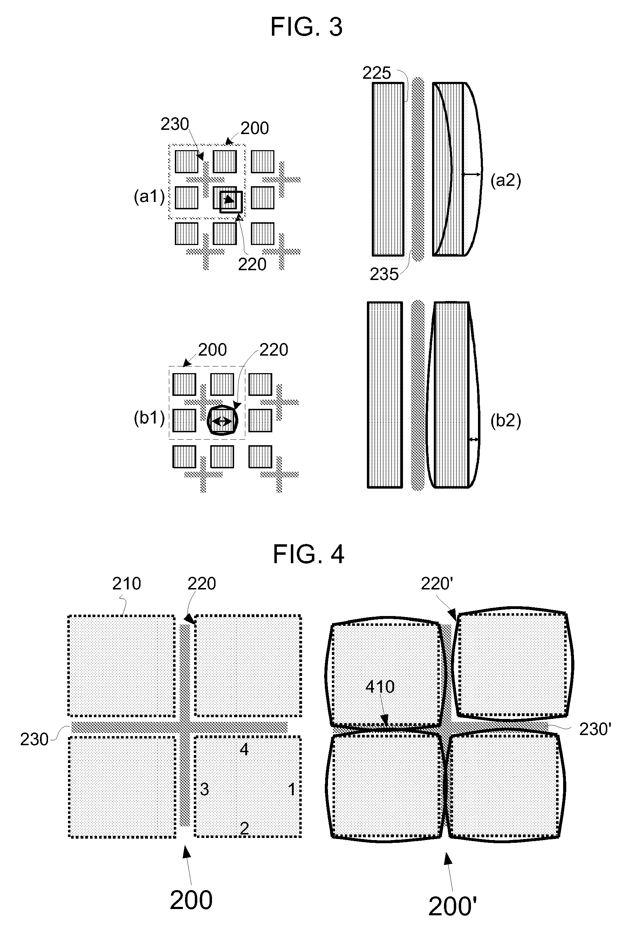

Fig. 3 illustrates two mechanisms of channel distortion in a control cell. For illustrative purposes, the control cell 200 has the channels 220 spaced out in the Fig. 3, and is not indicative of true dimensions in an operating BWR. The fuel channels 220 undergo channel deformations due to various nuclear and mechanical responses within an operating BWR. Fig. 3 illustrates two such kinds of channel deformations, "bow" and "bulge". Views (a1) and (b1) are 2D top views of a control cell 200 at a given axial elevation in the core; view (a2) is a close-up front view and shows the impact of the channel bow mechanism on channel face position relative to a control blade wing 235, and view (b2) is a close-up front view which shows the impact of the channel bulge mechanism on channel face position relative to a control blade wing.

In the bow mechanism, the channel face 225 deforms either towards the blade wing or away from the blade wing 235, as shown in (a2), where axially it has a generally sinusoidal shape, although some variation in this general shape can occur. In Fig. 3, the offset line in view (a1) shows this deformation, and shows the offset of the channel 220 due to bow in a control cell 200, which simply is a displacement of the channel 220. In the bulge mechanism, the channel 220 bulges as shown in view (b2) of Fig. 3. The bulge is outward for all four faces 225 of the channel 220, as shown in view (b1).

Channel deformation affects many operational and safety parameters of a BWR and therefore, should be addressed as part of reactor cycle core design, optimization, licensing and monitoring. Channel deformation can result in channel-control blade interference, which in turn results in an axial friction load on the blade during blade movement (also referred to as cell friction) that may hinder the operation of the control blade 230 in the cell 200.

Fig. 4 illustrates cell friction in a control cell. The channel-control blade interference is illustrated in Fig. 4 for two control cells, which show top views of the control cells, as if looking down into the core. In Fig. 4 the four channel faces are numbered 1-4 for one channel, to be referenced later for another illustration. The dimensions of the control blade and channels are specified to produce a gap between the control blade wings and adjacent channel faces. The cell 200 on the left shows four channels 220 without any deformation; therefore, the control blade 230 in the center maintains the as-fabricated clearance and thus has sufficient clearance to move freely in and out of the core (i.e., through the plane of the page). On the other hand, the control cell 200' on the right shows four channels 220' with substantial deformations that reduce the as-fabricated gaps between the control blade wings and the channels. The offset lines of two face adjacent channels actually touch each other at 410, leaving no gap for the control blade 230. Such conditions may result in channel-control blade interference that in turn results in a control blade axial friction force when the control blade 230' is moved in or out of the control cell 200'. This condition is referred to as "cell friction". The control blades in a BWR are actively used to safely and efficiently operate the reactor. Any hindrance to control blade operation may lead to an undesirable mitigating action. Such actions could, for example, penalize the full power operation strategy, resulting in lost capacity factor and/or incurred replacement power costs. Therefore, cell friction should be managed (assessed and mitigated) as part of reactor cycle core design, optimization, licensing and monitoring.

An example embodiment of the present invention is directed to a method of determining a cell friction metric for a control cell of a nuclear reactor. In the method, a channel face fast fluence and/or a channel face controlled operation parameter is determined for channels of the control cell. A total bow value is calculated for each channel based on the channel face fast fluence and/or channel face control parameters. For each channel, a channel wall pressure drop parameter is determined, and a total bulge value is calculated for each channel using the channel face fast fluence and channel wall pressure drop parameters. Total deformation at specified channel axial elevations for the control cell is determined based on the total bow and bulge values. A control blade axial friction force value is calculated at each axial elevation based on the total deformation, along with channel stiffness and channel-control blade friction coefficient values. The maximum friction force value is selected as the cell friction metric for the control cell.

Another example embodiment of the present invention is directed to a method of determining a core-average cell-average bow value for a nuclear reactor core having a plurality of cells. In the method, and for each cell in the core, a cell-average bow value is determined based on one or both of a calculated fast fluence gradient-induced bow value and a calculated shadow corrosion-induced bow value. The determined values are statistically combined for each cell to obtain a core-average cell-average bow value and uncertainty in core average cell average bow for the core.

Example embodiments of the present invention will become more fully understood from the detailed description given herein below and the accompanying drawings, wherein like elements are represented by like reference numerals, which are given by way of illustration only and thus are not limitative of the example embodiments of the present invention, and in which:

Fig. 1 is a top view of an example fuel bundle to illustrate a fuel channel.
Fig. 2 illustrates a 2D top view looking down on a control cell of a BWR.
Fig. 3 illustrates two mechanisms of channel distortion in a control cell.
Fig. 4 illustrates cell friction in a control cell.
Fig. 5 is a process flow diagram for illustrating a general method of determining a cell friction metric for a control cell of a BWR.
Figs. 6-8 illustrate process flow functions of the method as described in Fig. 5 in more detail.
Fig. 9 is a graph of measured channel bow versus predicted fast fluence gradient-induced bow to illustrate an example of the supporting technical bases for a particular channel application.
Fig. 10A and 10B illustrate the core-average cell-average bow and its standard deviation as a core progresses during an operating cycle.
Fig. 11 illustrates an example output display of cell friction metrics for all control cells in a BWR core for use in assessing and mitigating cell friction during reactor cycle core design, optimization, licensing and monitoring.

As used herein, a control cell, also known as a "blade-centered cell" may be represented as a control blade accountable between a group of fuel bundles. In another example a cell may be understand as an instrument-centered cell, which may be represented as an instrument tube accountable between a group of fuel bundles. Thus, a cell in some instances may be viewed as an "instrument-centered" cell or a blade-centered cell, since in a BWR some locations have a plant instrumentation tube surrounded by four bundles.

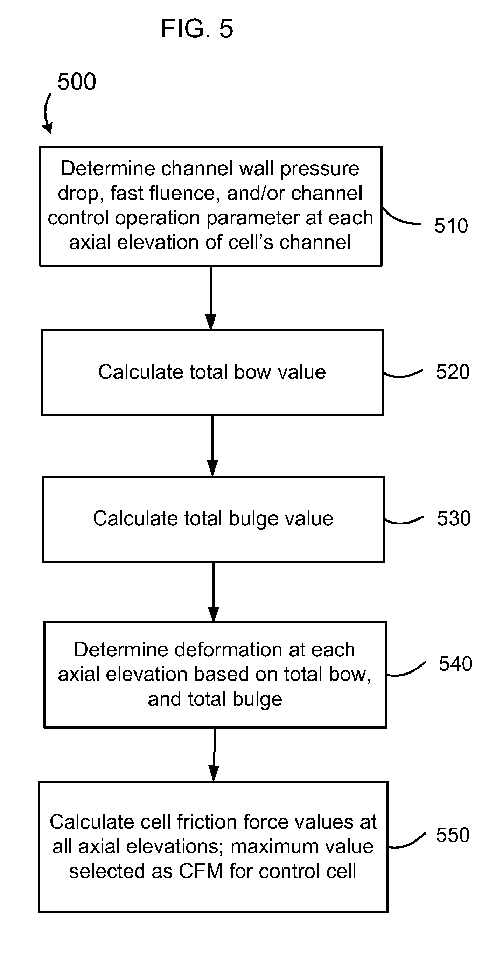

Fig. 5 is a process flow diagram illustrating a general methodology for determining a cell friction metric (CFM) for a BWR control cell. The CFM provides the core designer a means to assess and mitigate the effects of channel distortion and resulting cell friction in one or more channels of the control cell during one or more of the core design, optimization, licensing and/or monitoring phases of the specification for each operating cycle of a BWR. The example methodology may be linked to, and/or coded into, existing methods or software implementations used for core design, optimization, licensing and monitoring. As an example, the methodology may be implemented in a computer software module that is part of a set of computer programs used for BWR core design, optimization, licensing and monitoring.

In general, a method of determining a cell friction metric for a control cell includes calculating a number of channel displacements that are to be combined to obtain a total channel face displacement value also referred to as a total deformation. The calculated total channel displacements are then used to calculate the amount of interference between a control blade wing and the adjacent channels. Friction loads are calculated using the calculated interference values, interference dependent channel stiffness values and known or measured friction coefficients for the mating channel and control blade materials. Total channel displacement (deformation) values, channel-control blade interference values, and resulting friction forces may be calculated for each axial elevation of the cell, and then a cell friction force value or cell friction metric may be determined. The example cell friction methodology may be implemented as part of a module of computer programs used in an iterative optimization process, for example, as part of the programs used for design, optimization, licensing and monitoring of a BWR core.

In the method 500, and for each of one or more control cells of a core being designed or evaluated, the operational factors affecting channel deformation including, but not limited to, channel wall pressure drop (i.e. difference is pressure on the inside and outside of channel), channel wall fast fluence, and controlled operation parameters, may be determined 510 using a core simulator such as PANACEA to quantify such nuclear and mechanical responses. The channel face deformations or displacements (i.e., bow value at 520 and bulge value at 530) may be calculated using these calculated operational parameters with known mathematical representations analytically derived from theoretical considerations or from empirically based relations.

A total (channel face) deformation value at each of a plurality of axial elevations for the control cell may be determined (540) based on the total bow value and the total bulge value. A cell friction force value may be determined at each of the axial elevations based on the total deformation and resulting channel-control blade interference. The maximum value of the calculated cell friction force values for each of the axial elevations is taken (550) as the cell friction metric for the control cell. Alternative treatments can be applied to address the calculated axial distribution of cell friction force, as it contributes to the actual achieved net cell friction.

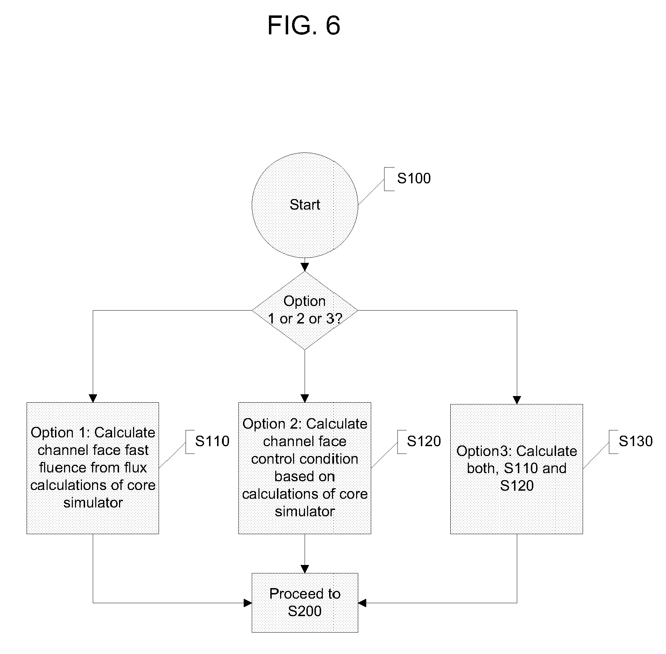

Figs. 6-8 illustrate process flow functions of the method described in Fig. 5 in more detail. In Fig. 6, functions S 100 to S200 illustrate a process for calculating a fast fluence parameter and/or a channel controlled operation parameter, depending on the calculation option of the user or core designer. The calculation of fast fluence and controlled operation parameters shown in Fig. 6 may be performed either as a normal part of standard core simulator applications, or the required information may be readily extractable from the calculations performed as a normal part of standard core simulator applications. Although not shown in Fig. 6, the user or core designer may also select calculations for other channel deformation mechanisms, such as thermal expansion, as-fabricated stress relaxation-induced channel bow, channel twist/rotation, or as-fabricated cold work-induced channel bow.

As an illustration, a generalized fast fluence accumulation is exemplified by expression (1):

$$FLUNCE(k,i,j,n) = FLUNCE_{t-1}(k,i,j,n) + DT * FLUXS(k,i,j,n) \qquad (1)$$

In expression (1), $FLUNCE(k,i,j,n)$ is the channel face neutron fluence [neutrons/cm$^2$] at an axial elevation $k$, in channel $(i, j)$, on channel face $n$. The core coordinates $(i, j)$ uniquely identify the channel location in the core.

$FLUNCE_{t-1}(k, i, j, n)$ is the fluence at the start of the current time step $DT$. The time step DT represents a time increment in the tracking of the core burn to produce power. $FLUXS(k,i,j,n)$ is the channel face neutron flux [neutrons/cm$^2$-sec] above the energy level specified to characterize "fast" neutrons.

The $FLUXS(k, i, j, n)$ calculation is a straightforward product of results of standard calculations performed in typical core simulations. Channel irradiation growth is a known function of accumulated fast fluence for a specific channel material, while also a function of channel material characteristics such as, but not limited to, texture, residual cold work, and channel hydrogen content. With the irradiation growth relation for the channel material, in conjunction with the calculated channel fast fluence, the total irradiation growth of opposite channel faces may be calculated. Fast fluence gradient-induced channel bow may be readily calculated from the differential growth of opposite channel faces, in conjunction with channel geometry parameters. Alternatively, the fast fluence gradient-induced channel bow may be calculated from empirical relations derived from channel bow measurements and approximations to the accumulated fast fluence gradient, such as by using calculated exposure gradients across an individual channel.

As a second illustration, a generalized channel face controlled operation parameter may be exemplified by expression (2):

$$ECBE(i, j) = ECBE_{t-1}(i, j) + LENGTH(i, j) * DT * f \qquad (2)$$

In expression (2), $ECBE(i, j)$ is the controlled operation parameter, and $ECBE_{t-1}(i, j)$ is the controlled parameter accumulated to the start of the current time step. $LENGTH(i, j)$ is the channel length controlled in the current time increment $DT$, weighted by a factor $f$. The factor $f$ is an effective controlled exposure-weighting factor that is dependent on the total residence time of the channel and can range from 0.0 to 1.0. The definition of $f$ is determined from comparisons of predicted channel deformations to measured channel deformations. The factor can address the relative importance of channel exposure to the control blade as it may vary during the channel operating lifetime, while also reflecting axial sensitivity dependencies, for example, such as a greater contribution by the control blade handle, or with control at the axial location of peak fast fluence. With this generalized channel face controlled operation parameter, the control blade shadow corrosion-induced channel bow can be calculated from empirically based relations of channel bow as a function of the controlled operation parameters and other important performance parameters such as total accumulated channel average exposure, for example.

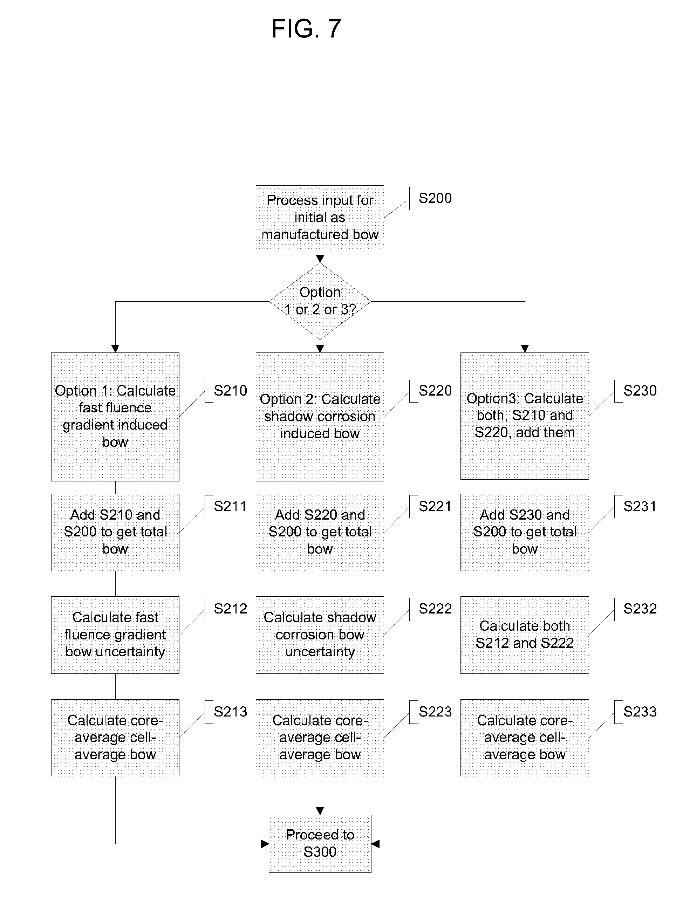

In Fig. 7, functions S200 to S300 generally describe the calculation of fast fluence gradient induced channel bow and/or control blade shadow corrosion-induced channel bow so as to determine a core-average cell-average bow *(BOWAVG)* value, depending on the calculation option (1, 2 or 3) selected by the user or core designer. The calculations are performed based on the core simulator calculation of the appropriate operational neutronic parameters, in conjunction with theoretically or empirically based relationships to determine bow values. Uncertainty values, or uncertainty relationships as a function of the core simulator operational parameters, are determined from comparisons of channel deformations predicted with theoretically or analytically based models to measured channel deformations.

Function S200 accounts for an initial as-fabricated (manufactured) bow for a channel. In a known core simulator such as the PANACEA core simulator, this parameter is based on generic values that reflect the channel type and plant type dependency to assign a generic value. In functions S210, S220 and S230, the calculation of fast fluence gradient induced bow and/or shadow corrosion-induced bow is performed for each channel in the core, at each axial elevation and on each channel face. The fast fluence gradient induced bow is calculated from the differential growth strain on opposite channel faces. As shown by the numbered channel faces in Fig. 4, there are two such sets of faces: channel faces 1-3 and faces 2-4. The channel growth strain is induced by the fast fluence on each channel face. An empirical correlation of Zircaloy irradiation growth as a function of fast fluence is shown below in the expression set (3) to illustrate the use of neutronic parameters, in conjunction with theoretically or empirically based relationships.

$$GROW(k,i,j,n) = C1*G*Max(R_L, R_H),\qquad(3)$$

where:

$$G = C2 + C3*(FLUNCE(k,i,j,n))^{C4}, \; if \; FLUNCE(k,i,j,n) \le C5 \; n/cm^2$$

$$= C6 + C7*FLUNCE(k,i,j,n) + C15*(FLUNCE(k,i,j,n))^{C16}$$

$$+ C8*(FLUNCE(k,i,j,n))^{C9}, \; otherwise$$

$$R_L = C10 + C11\,T + C12\,T^2$$

$$R_H = C13 + C14\,T$$

In the expression set (3) above, *GROW(k, i, j, n)* is a dimensionless growth strain, *T* is the irradiation temperature, and the coefficients *C1* through *C16* have theoretical and empirical bases. Using the dimensionless growth strain, the fast fluence gradient induced bow may be calculated using straightforward mathematical relations. These relations are known to the skilled artisan in the nuclear reactor art and are therefore omitted for purposes of brevity. Alternatively, the fast fluence gradient-induced channel bow may be calculated from empirical relations derived from channel bow measurements and approximations to the accumulated fast fluence gradient, such as by using calculated exposure gradients across an individual channel.

The shadow corrosion bow is characterized in the PANACEA core simulator as a generalized nonlinear model dependent on the channel face controlled operation parameter *ECBE(i, j)* illustrated above. An illustration of the model is the polynomial relation

$$\mu_s = A3 + A4*ECBE(i,j) + A5*ECBE(i,j)^2 + ...\qquad(4)$$

In expression (4), $\mu_s$ is the amount of shadow corrosion bow and is also dependent on accumulated channel exposure. Channel exposure is representative of how long the channel has resided in an operating core. The coefficients *A3, A4, A5* ... in the relation, and the channel exposure dependency, are determined from comparisons of predicted and measured channel deformations, and they may vary for different reactor classes, cell geometries, and water chemistry environments.

The core-average cell-average bow *(BOWAVG)* value typically is calculated using the maximum bow value from all axial elevations for all channel faces that face a blade wing. The *BOWAVG* calculation is well known in the art and is required for licensing of the plant.

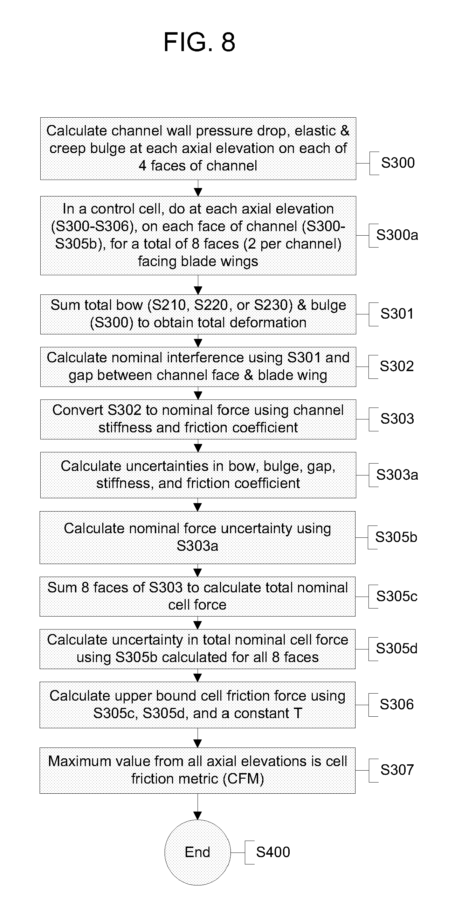

In Fig. 8, the channel wall pressure drop and the total bulge (elastic plus creep) may be calculated [S300] using equations with an empirical and/or mathematical/physics basis in a core simulator such as PANACEA to directly reflect the calculated nuclear and mechanical operating conditions affecting channel bulge deformation. For example, the channel fast fluence, the channel wall pressure drop and the channel exposure represent calculated nuclear and mechanical operating conditions affecting channel bulge deformation. The calculated channel fast fluence, channel wall pressure drop and channel exposure values are used to calculate the elastic and the creep components of bulge. The total bulge is the summation of the elastic and the creep components.

As shown in S300a, in each control cell, and at each axial elevation in the control cell, functions S301 to S306 are performed. At each axial elevation, functions S301 to S305b are performed for each of the eight faces facing a blade wing (2 per channel for 4 channels) at that axial location.

For each face at a given axial elevation in the control cell, all sources of channel distortion (results from one of S110, S120 or S130 in Fig. 6, and results from one of S213, S223 or S233 in Fig. 7), are combined at function S301 to obtain a total deformation. In general, functions S302 through S307 in Fig. 8 use the total deformation to calculate the uncertainties in deformations (S303a, S305b, and S305d in Fig. 8) and to also calculate the nominal and statistical upper bound channel-blade interference and resulting axial friction forces (S303, S304, S305, S305b, S305c, and

S306 in Fig. 8). A cell friction force is calculated (S306) at each axial elevation for all channel faces, with the maximum force from all axial elevations in a cell taken as the cell friction metric (S307) for the cell.

The calculation of channel fast fluence and channel controlled operation parameters (functions S 110, S120 and S130), fast fluence channel bow and shadow corrosion-induced bow (S210, S220, S230), uncertainties in bow (S212, S222, S232), elastic and creep bulge (S300), cell friction metric (functions S301, S302, S303, S304, S305, S305c, S306 and S307), and uncertainties in the CFM (functions S303a, S305a, S305b, S305d) are based on generalized equations that have a theoretical or empirical basis. Such equations are known to, or easily derived by, the skilled artisan in the nuclear reactor art and is therefore omitted for purposes of brevity.

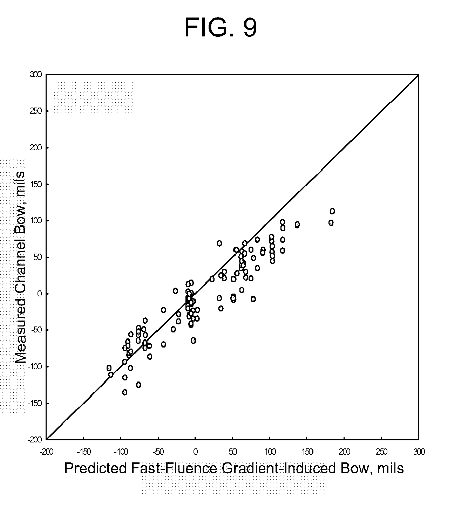

Fig. 9 is a graph of measured channel bow versus predicted fast fluence gradient-induced bow to illustrate an example of the supporting technical bases for a particular channel application. Fig. 9 presents a comparison of measured channel bow to the channel bow predicted by the PANACEA core simulator based on predicted nuclear operational conditions and channel material measured physical properties. The solid line in Fig. 9 represents a perfect agreement between the predicted and measured values. The symbols represent the actual comparisons of the predicted and measured bow for each channel face and the scatter of the symbols about the solid line represents the uncertainty in the bow prediction.

Therefore, as described above, available state-of-the-art models calculate each component of channel distortion. Improved robustness may be achieved if the example methodology is coupled to a high accuracy core simulation code (such as the PANACEA core simulator) and configured to use core simulation results as inputs to the channel distortion calculations. For example, channel wall fast fluence and channel wall pressure drop may be calculated as the channel operates, using a set of general methods consisting of equations with well-established empirical and/or mathematical/physics bases. Such equations are well known to the skilled artisan in the nuclear reactor art, and are therefore omitted for purposes of brevity. Such use of core simulation results in the example methodology assures that the calculated channel deformations reflect actual or projected operation of the channel.

The different components of channel distortion may then be added together to give a best estimate value of total deformation (see S301 in Fig. 8) on each face of the channel. The best estimate values may be combined with their associated uncertainties to provide channel distortion inputs for evaluation of safety parameters. For example, the core-average cell-average bow (BOWAVG) and its uncertainty are calculated for input to the safety limit minimum critical power ratio (MCPR) calculation. In another example, eight channel distortions in a control cell, i.e., distortions for the eight (8) channel faces facing the blade wing (2 faces per channel for 4 channels), may be combined to obtain channel-control interference and resulting axial friction force on the blade.

With the calculation of best estimate channel face distortions, a nominal, or expected, cell friction force may be calculated (S305c in Fig. 8). With the inclusion of the uncertainties in the calculated parameters (S305b in Fig. 8), a statistically based upper bound value of the cell friction force (S306 in Fig. 8) can be calculated as shown in the example expression set (5) below.

$$F_{Upper} = F_{Nominal} + T\sigma_F \qquad\qquad (5)$$

where

$F_{Upper} =$ Statistically based upper bound control blade friction force

$F_{Nominal} =$ Nominal control blade friction force

$T =$ Statistical factor

$\sigma_F =$ Uncertainty in cell friction

In expression set (5), the uncertainty in the cell friction force ($\sigma_F$), can be determined using conventional statistical methods, such as Monte Carlo simulation or standard error propagation, based on the known input parameter uncertainties. The statistical factor $T$ is selected to provide the desired level of statistical confidence and may be determined on the basis of characterization of in-reactor experience with control blades with high friction. The maximum value of cell friction force ($F_{Upper}$) from all axial elevations is taken as the cell friction metric (CFM, see S307 in Fig. 8).

The statistical factor $T$ may be included in the calculations at functions S305b and S306. The statistical factor $T$ utilizes available industry experience for blades with high interference and high friction to increase the statistical confidence representation of the results in the example methodology. Therefore, the example methodology utilizes the best models available for prediction of interferences and friction forces, and, concurrently, provides a high level of statistical assurance by reflecting actual industry experience with problem control cells.

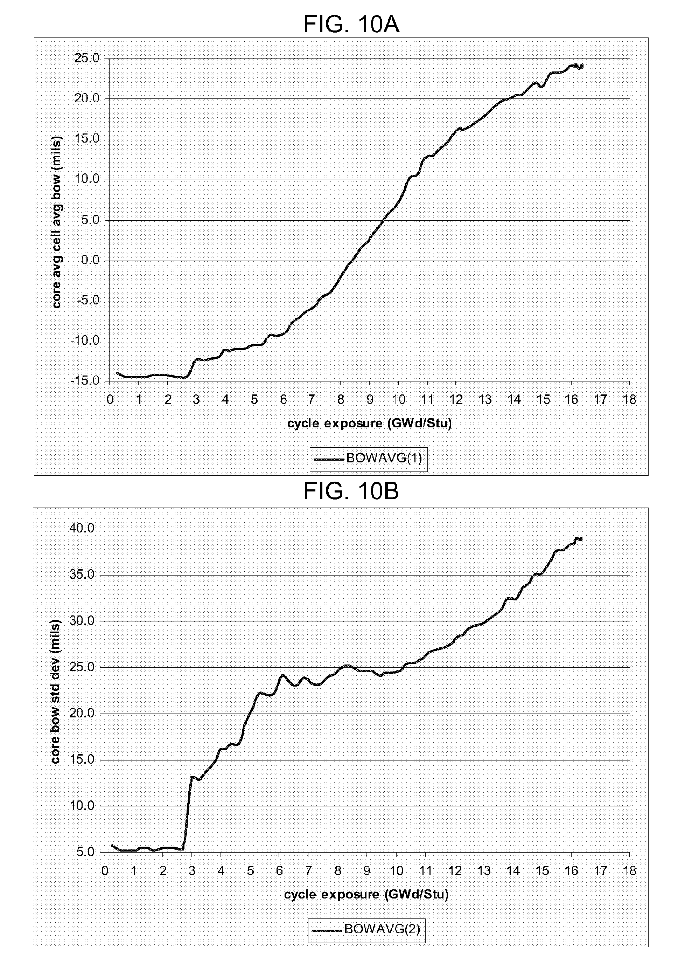

Figs. 10A and 10B illustrates the core-average cell-average bow and its standard deviation as a BWR core operates through an energy cycle. The cell-average bow is calculated as the average of maximum bow on eight channel faces in a control cell. In some examples, a cell may be viewed as an "instrument-centered" cell rather than a blade-centered cell, since in a BWR some locations have a plant instrumentation tube surrounded by four bundles. However, the same concepts apply for an instrument-centered cell.

Core-average cell-average bow is calculated by taking a statistical sampling of the cell-average bows, where the sampling includes the uncertainties on the maximum bows on eight channel faces in a control cell. Furthermore, the process may include the requirement that only cells that have bundle powers greater than a specified minimum value at anytime in life, be included in the statistical sampling. Referring to Fig. 10A, the core-average cell-average bow $BOWAVG(1)$ and its standard deviation $BOWAVG(2)$ in Fig. 10B, is shown in mils (1/1000$^{th}$ of an inch) as a function of cycle exposure, as the core burns. A gradual transition of $BOWAVG(1)$ from negative about -15 mils at beginning-of-cycle (BOC) to a positive 24 mils at end-of-cycle (EOC) is observed. Correspondingly, $BOWAVG(2)$ increases from about 5 mils at BOC to about 38 mils at EOC.

In Fig. 10A, "best estimate values" of channel bow along with associated uncertainties and a statistical sampling within the uncertainty may be used to obtain $BOWAVG$, values with a high degree of statistical assurance. Both fast fluence gradient induced bow and shadow corrosion induced bow may be included in this analysis. These values are relevant inputs to other aspects of reactor core design, optimization, licensing, and monitoring. For example, the nuclear material cross sections used for neutronic calculations, including bundle power calculations, are functions of the channel bow. In another example, the safety limit minimum critical power ratio (MCPR) calculation utilizes the fast fluence gradient induced bow and shadow corrosion induced bow uncertainties.

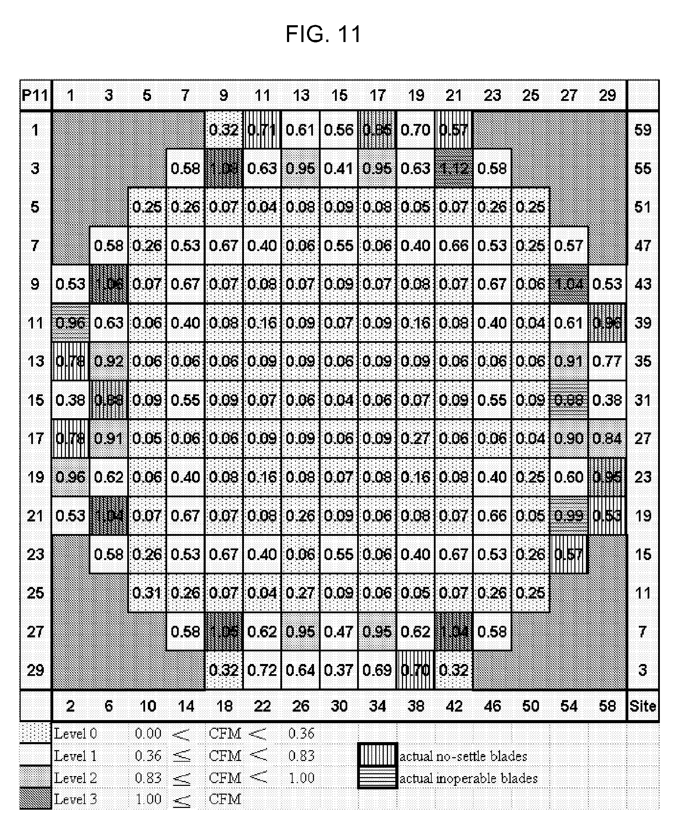

Fig. 11 illustrates an example output display for assessing cell friction in a BWR core. In this example, Fig. 11 illustrates a cell friction metric map for all control cells in a BWR core. The cells may be color coded (or distinguished by another criteria) to indicate different levels of CFM severity, here shown as levels 0-3. The same information could be displayed by including a severity key for each control cell.

In one example application, the results data may be output via a user command to a desired display result for assessment. In another example, the results data may be stored as part of a set of computer programs designed to implement the example method in an automated process to calculate and mitigate CFMs above a certain level for all control cells in the core. Fig. 11 also illustrates actual problem cells encountered during operation by horizontal or vertical bars. In this visual example, horizontal bars represent control cells where cell friction is more severe compared to control cells with the vertical bars.

Referring to Fig. 11, each number represents the calculated CFM value in that control cell normalized to a limiting value. CFM level 3 is more severe than level 1. For example, level 3 could be a design limit or severity threshold for an inoperable blade, whereas level 1 could be a severity threshold for the potential of a no-settle blade. Level 0 is the least severe level indicating that there is no risk of elevated cell friction in that control cell, with a very high level of statistical confidence.

As shown in Fig. 11, a user or core designer may group channels (bundles) with different levels of severity based on the calculated CFM values. Such grouping can assist the user or core designer in formulating mitigating actions for each group. For example, theoretically based thresholds may be used to set the different levels. The user also has an option to use experience-based thresholds based on, for example, the availability of plant specific operating experience. The theoretically based thresholds would be taken as conservative estimates that may be adjusted by the user or core designer when there is confidence in using higher experience-based thresholds. Reducing the number of problem cells has a significant impact on the economics of managing channel distortion and cell friction concerns. In this regard, the example method provides flexibility to mitigate the concerns based on the degree of confidence desired by the user. Although the user sees only the CFM in each cell, in the example in Fig 11, there is detailed information available and accessible to the user in the core simulator output files to assess the magnitude of the problem for a specific cell or cells based on different channel distortion components contributing to the CFM.

For example, detailed axial information on the CFM is available to assess the severity of the problem at different axial elevations of the cell, where the axial elevations have been set in advance for a core simulation. Furthermore, detailed information on deformations and uncertainties contributing to the CFM are available in the core simulator output files for each of the four channels in a control cell. This information may assist the user in formulating and implementing mitigating actions during various stages of reactor cycle core design, optimization, licensing and monitoring. As an example, during the core design and/or optimization stage (where a core configuration is being designed or modeled) channels (bundles) may be arranged so as to place problem channels together in a single cell, or group of cells, so as to create "sacrificial cells" for re-channeling. Alternatively, problem channels (bundles) may be dispersed throughout the core in an effort to minimize interference and friction in all cells. In order to establish a desired control blade monitoring strategy, the example methodology may provide the ability to identify susceptible cells (as shown in Fig. 11 for example) in a straightforward and flexible manner based on established criteria, as the core burns.

Accordingly as described herein, the example method of determining a cell friction metric for a control cell of a nuclear reactor may mitigate the effects of distortion from one or more channels in a cell, as the distortion can produce interference with the cell control blade and possibly lead to control cell axial friction and impairment of control blade movement.

In the method, channel face displacements at specific channel axial elevations may be calculated from known physical properties of the channel material and the channel operating conditions, including, but not limited to, channel bow and channel bulge. In an example for a control cell, the channel face displacements may be calculated for each of the eight channel faces adjacent to the control blade wings in an individual control cell. The interference between an individual control blade wing and its two adjacent channels at each axial elevation is calculated from the calculated channel face displacements at that axial elevation. The channel-control blade interference may be similarly calculated for each control blade wing in the cell to determine the total interference at each axial elevation.

The cell friction at a specific axial elevation may be calculated from the total calculated channel-control blade interference at that axial elevation, and from the known channel stiffness and friction coefficients for the mating channel and control blade materials. Such total deformation, interference, and cell friction at each of a plurality of axial elevations in the control cell may then be determined. The maximum of the calculated cell friction force at any axial elevation is selected as the cell friction metric for the control cell.

Therefore, the example methodology may provide a means to focus on channel distortion and cell friction concerns during various stages of operating nuclear reactor cycle core design, optimization, licensing and monitoring. The ability to quantify the severity of channel distortion and cell friction (by a cell friction metric) provides a basis for making core design decisions and/or taking mitigating actions based on the calculated and projected channel operation. The example methodology may be linked to, and coded into, existing methods used for core design, optimization, licensing and monitoring. For example, the method may be implemented in a computer software module that is part of a set of existing computer programs used for core design, optimization, licensing and monitoring.

The example embodiments of the present invention being thus described, it will be obvious that the same may be varied in many ways. Such variations are not to be regarded as departure from the spirit and scope of the example embodiments of the present invention, and all such modifications as would be clear to one skilled in the art are intended to be included within the scope of the following claims.

**PARTS LIST**

| REFERENCE NUMBER | DESCRIPTION |
| --- | --- |
| 110 | Fuel bundles |
| 115 | Rod grid location |
| 120 | Fuel channels |
| 200 | Control cell |
| (a1) | 2D top view of a control cell |
| (b1) | 2D top view of a control cell |
| 200' | Control cell |
| 210 | Fuel assembly |
| 220 | Fuel channels |
| 220' | Fuel channels |
| 225 | Channel face |
| (a2) | Close-up front view |
| (b2) | Close-up front view |
| 230 | Control blade |

(continued)

| REFERENCE NUMBER | DESCRIPTION |
| --- | --- |
| 230' | Control blade |
| 235 | Blade wing |
| 410 | Point at meeting of two face adjacent channels |

**Claims**

1. A method of determining a cell friction metric for a cell of a nuclear reactor, comprising:

   determining (510) one or both of a channel face fast fluence parameter and a channel face controlled operation parameter for each channel in the control cell,
   calculating (520) a total bow value for each channel face in the control cell at each of a plurality of channel axial elevations,
   calculating (530) a total bulge value at each channel axial elevation for each channel face in the control cell,
   determining (540) total deformation at each channel axial elevation for the control cell based on the total bow value and the total bulge value,
   calculating (550) a cell axial friction force value at each of the axial elevations based on the total deformation, and selecting the maximum of the calculated cell friction force values as the cell friction metric for the control cell.

2. The method of claim 1, further comprising comparing the cell friction metric against a plurality of severity thresholds to assess the severity of the channel distortion and resulting control blade axial friction load on operation of the cell's control blade.

3. The method of claim 1 of claim 2, wherein calculating a total bow value includes determining (S233) a core-average cell-average bow value based on one or both of a calculated fast fluence gradient-induced bow value (S212) and a calculated shadow corrosion-induced bow value (S222) for each cell in the core.

4. The method of claim 3, wherein determining the cell-average bow value includes:

   calculating a fast fluence gradient-induced bow value (S210) for each channel in the cell,
   adding the fast fluence gradient-induced bow to an initial manufactured bow value to get a total bow value (S211),
   calculating a fast fluence gradient bow uncertainty value (S212), and
   combining the total bow value with its calculated uncertainty to determine the cell-average bow value and uncertainty in cell average bow (S213).

5. The method of claim 3 or claim 4, wherein determining a cell-average bow value includes:

   calculating a shadow corrosion-induced bow value (S220) for each channel in the cell, adding the shadow corrosion-induced bow to an initial manufactured bow value (S221) for the cell to get a total bow value,
   calculating a shadow corrosion bow uncertainty value (S222), and
   combining the total bow value with its calculated uncertainty (S223) to determine the cell-average bow value and uncertainty in cell average bow.

6. The method of any one of claims 3 to 5, wherein determining a cell-average bow value includes:

   calculating a fast fluence gradient-induced bow value and a shadow corrosion induced bow value (S230) for each channel in the cell,
   adding the fast fluence gradient-induced bow value and the shadow corrosion induced bow to an initial manufactured bow value (S231) for the cell to get a total bow value, calculating a fast fluence gradient bow uncertainty and a shadow corrosion bow uncertainty value (S232), and
   combining the total bow value with its calculated uncertainties (S233) to determine the cell-average bow value and uncertainty in cell average bow.

7. The method of any preceding claim, wherein

calculating the total bulge value for the control cell includes calculating an elastic bulge value and a creep value (S300) at each axial elevation for each face of a channel that is facing a blade wing of the control blade in the control cell, and

determining total deformation to include summing, for each axial elevation on each face of a channel that is facing a blade wing, the total bow and total bulge values (S301), so as to have a total deformation value at each axial location for each channel face that faces a blade wing.

8. The method of any preceding claim, wherein calculating a cell friction force value at each of the axial elevations includes:

determining, at each axial elevation on each face of a channel that is facing a blade wing, a nominal friction force value (S303) and an uncertainty in friction force value (S305b), and

combining the nominal and friction force uncertainty values of all faces to determine the nominal (S305c) and statistical upper bound friction force value (S306) for the cell at the given axial elevation.

9. The method of any preceding claim, wherein determining a nominal friction force includes:

calculating, at each axial elevation, a nominal interference value (S302) between a given channel face and its facing control blade wing based on the total deformation at that axial elevation, and

converting the calculated nominal interference value to a nominal friction force value (S303) using channel stiffness values based upon the calculated interference for each face and a channel-control blade friction coefficient.

10. The method of claim 8 or claim 9, wherein determining an upper bound friction force includes:

calculating, at each axial elevation, an upper bound interference value between a given channel face and its facing control blade wing based on the total deformation at that elevation, and

converting the calculated upper bound interference value to an upper bound force value using channel stiffness values based upon the calculated interference for each face and a channel-control blade friction coefficient.

FIG. 1

FIG. 2

# FIG. 3

# FIG. 4

# FIG. 5

500

Determine channel wall pressure drop, fast fluence, and/or channel control operation parameter at each axial elevation of cell's channel — 510

↓

Calculate total bow value — 520

↓

Calculate total bulge value — 530

↓

Determine deformation at each axial elevation based on total bow, and total bulge — 540

↓

Calculate cell friction force values at all axial elevations; maximum value selected as CFM for control cell — 550

# FIG. 6

Start — S100

Option 1 or 2 or 3?

Option 1: Calculate channel face fast fluence from flux calculations of core simulator — S110

Option 2: Calculate channel face control condition based on calculations of core simulator — S120

Option3: Calculate both, S110 and S120 — S130

Proceed to S200

# FIG. 7

# FIG. 8

Calculate channel wall pressure drop, elastic & creep bulge at each axial elevation on each of 4 faces of channel — S300

In a control cell, do at each axial elevation (S300-S306), on each face of channel (S300-S305b), for a total of 8 faces (2 per channel) facing blade wings — S300a

Sum total bow (S210, S220, or S230) & bulge (S300) to obtain total deformation — S301

Calculate nominal interference using S301 and gap between channel face & blade wing — S302

Convert S302 to nominal force using channel stiffness and friction coefficient — S303

Calculate uncertainties in bow, bulge, gap, stiffness, and friction coefficient — S303a

Calculate nominal force uncertainty using S303a — S305b

Sum 8 faces of S303 to calculate total nominal cell force — S305c

Calculate uncertainty in total nominal cell force using S305b calculated for all 8 faces — S305d

Calculate upper bound cell friction force using S305c, S305d, and a constant T — S306

Maximum value from all axial elevations is cell friction metric (CFM) — S307

End — S400

# FIG. 9

## FIG. 10A

## FIG. 10B

# FIG. 11

| P11 | 1 | 3 | 5 | 7 | 9 | 11 | 13 | 15 | 17 | 19 | 21 | 23 | 25 | 27 | 29 | Site |
|---|---|---|---|---|---|---|---|---|---|---|---|---|---|---|---|---|
| 1 | | | | | 0.32 | 0.71 | 0.61 | 0.56 | 0.85 | 0.70 | 0.57 | | | | | 59 |
| 3 | | | | 0.58 | 1.04 | 0.63 | 0.95 | 0.41 | 0.95 | 0.63 | 1.12 | 0.58 | | | | 55 |
| 5 | | | 0.25 | 0.26 | 0.07 | 0.04 | 0.08 | 0.09 | 0.08 | 0.05 | 0.07 | 0.26 | 0.25 | | | 51 |
| 7 | | 0.58 | 0.26 | 0.53 | 0.67 | 0.40 | 0.06 | 0.55 | 0.06 | 0.40 | 0.66 | 0.53 | 0.25 | 0.57 | | 47 |
| 9 | 0.53 | 1.04 | 0.07 | 0.67 | 0.07 | 0.08 | 0.07 | 0.09 | 0.07 | 0.08 | 0.07 | 0.67 | 0.06 | 1.04 | 0.53 | 43 |
| 11 | 0.96 | 0.63 | 0.06 | 0.40 | 0.08 | 0.16 | 0.09 | 0.07 | 0.09 | 0.16 | 0.08 | 0.40 | 0.04 | 0.61 | 0.96 | 39 |
| 13 | 0.78 | 0.92 | 0.06 | 0.06 | 0.06 | 0.09 | 0.09 | 0.06 | 0.09 | 0.09 | 0.06 | 0.06 | 0.06 | 0.91 | 0.77 | 35 |
| 15 | 0.38 | 0.88 | 0.09 | 0.55 | 0.09 | 0.07 | 0.06 | 0.04 | 0.06 | 0.07 | 0.09 | 0.55 | 0.09 | 0.88 | 0.38 | 31 |
| 17 | 0.78 | 0.91 | 0.05 | 0.06 | 0.06 | 0.09 | 0.09 | 0.06 | 0.09 | 0.27 | 0.06 | 0.06 | 0.04 | 0.90 | 0.84 | 27 |
| 19 | 0.96 | 0.62 | 0.06 | 0.40 | 0.08 | 0.16 | 0.08 | 0.07 | 0.08 | 0.16 | 0.08 | 0.40 | 0.25 | 0.60 | 0.96 | 23 |
| 21 | 0.53 | 1.04 | 0.07 | 0.67 | 0.07 | 0.08 | 0.26 | 0.09 | 0.06 | 0.08 | 0.07 | 0.66 | 0.05 | 0.99 | 0.53 | 19 |
| 23 | | 0.58 | 0.26 | 0.53 | 0.67 | 0.40 | 0.06 | 0.55 | 0.06 | 0.40 | 0.67 | 0.53 | 0.26 | 0.57 | | 15 |
| 25 | | | 0.31 | 0.26 | 0.07 | 0.04 | 0.27 | 0.09 | 0.06 | 0.05 | 0.07 | 0.26 | 0.25 | | | 11 |
| 27 | | | | 0.58 | 1.04 | 0.62 | 0.95 | 0.47 | 0.95 | 0.62 | 1.04 | 0.58 | | | | 7 |
| 29 | | | | | 0.32 | 0.72 | 0.64 | 0.37 | 0.69 | 0.70 | 0.32 | | | | | 3 |
| | 2 | 6 | 10 | 14 | 18 | 22 | 26 | 30 | 34 | 38 | 42 | 46 | 50 | 54 | 58 | Site |

| | | | | |
|---|---|---|---|---|
| Level 0 | 0.00 ≤ | CFM < | 0.36 | |
| Level 1 | 0.36 ≤ | CFM < | 0.83 | actual no-settle blades |
| Level 2 | 0.83 ≤ | CFM < | 1.00 | actual inoperable blades |
| Level 3 | 1.00 ≤ | CFM | | |

## EUROPEAN SEARCH REPORT

**European Patent Office**

**Application Number**

EP 07 10 2350

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 988 476 A (SADAOKA NORIYUKI [JP] ET AL) 29 January 1991 (1991-01-29) | 1-4,7-10 | INV.<br>G21C17/06 |
| Y | * the whole document * | 5,6 | |
| | ----- | | |
| Y | US 2006/193422 A1 (DAVIS MICHAEL D [US] ET AL) 31 August 2006 (2006-08-31)<br>* page 1, paragraph 4 - paragraph 5 * | 5,6 | |
| | ----- | | |
| A | JP 10 010275 A (TOKYO SHIBAURA ELECTRIC CO) 16 January 1998 (1998-01-16)<br>* abstract * | 1-10 | |
| | ----- | | |
| A | EP 0 798 747 A (GEN ELECTRIC [US])<br>1 October 1997 (1997-10-01)<br>* page 2, line 1 - line 13 * | 5,6 | |
| | ----- | | |

**TECHNICAL FIELDS SEARCHED (IPC)**

G21C

The present search report has been drawn up for all claims

| Place of search | Date of completion of the search | Examiner |
|---|---|---|
| Munich | 1 June 2007 | Zanotti, Laura |

EPO FORM 1503 03.82 (P04C01)

**ANNEX TO THE EUROPEAN SEARCH REPORT
ON EUROPEAN PATENT APPLICATION NO.**

EP 07 10 2350

This annex lists the patent family members relating to the patent documents cited in  the above-mentioned European search report.
The members are as contained in the European Patent Office EDP file on
The European Patent Office is in no way liable for these particulars which are merely given for the purpose of information.

01-06-2007

| Patent document cited in search report | | Publication date | Patent family member(s) | | Publication date |
|---|---|---|---|---|---|
| US 4988476 | A | 29-01-1991 | NONE | | |
| US 2006193422 | A1 | 31-08-2006 | NONE | | |
| JP 10010275 | A | 16-01-1998 | JP 3679866 B2 | | 03-08-2005 |
| EP 0798747 | A | 01-10-1997 | JP 10010263 A | | 16-01-1998 |
| | | | US 6128361 A | | 03-10-2000 |

EPO FORM P0459

For more details about this annex : see Official Journal of the European Patent Office, No. 12/82